Europäisches Patentamt

**European Patent Office**

Office européen des brevets

(19)

(11) Numéro de publication: **0 089 274 B1**

(12) **FASCICULE DE BREVET EUROPEEN**

(45) Date de publication du fascicule du brevet:
27.09.89

(51) Int. Cl.⁴: **G 11 B 7/09,** G 11 B 7/007,
G 11 B 27/30

(21) Numéro de dépôt: 83400466.5

(22) Date de dépôt: 07.03.83

(54) Support optique d'informations, dispositif de suivi de piste et dispositif optique de génération d'un signal d'erreur de focalisation.

(30) Priorité: **12.03.82 FR 8204221**

(43) Date de publication de la demande:
**21.09.83 Bulletin 83/38**

(45) Mention de la délivrance du brevet:
**27.09.89 Bulletin 89/39**

(84) Etats contractants désignés:
**DE GB IT NL SE**

(73) Titulaire: **THOMSON-CSF, 51, Esplanade du Général de Gaulle, F-92800 Puteaux (FR)**

(72) Inventeur: **Bricot, Claude, THOMSON-CSF SCPI 173, bld Haussmann, F-75379 Paris Cedex 08 (FR)**
Inventeur: **Berthet, Pierre, THOMSON-CSF SCPI 173, bld Haussmann, F-75379 Paris Cedex 08 (FR)**
Inventeur: **Gerard, Jean-Louis, THOMSON-CSF SCPI 173, bld Haussmann, F-75379 Paris Cedex 08 (FR)**

(74) Mandataire: **Grynwald, Albert et al, THOMSON-CSF SCPI, F-92045 PARIS LA DEFENSE CEDEX 67 (FR)**

(56) Documents cités:
**EP-A- 0 032 271**
**EP-A- 0 077 641**
**EP-A- 0 077 642**
**EP-A- 0 077 643**
**EP-A- 0 077 644**
**FR-A- 2 312 091**
**FR-A- 2 347 743**
**FR-A- 2 420 182**
**US-A- 3 673 412**
**US-A- 3 919 697**

## Description

La présente invention concerne un procédé permettant le suivi radial d'une piste d'un support d'information optique, notamment en forme de disque, par un faisceau d'énergie lumineuse ainsi que la focalisation de ce faisceau sur un plan déterminé du support. L'invention concerne également un dispositif de mise en œuvre de ce procédé.

De nombreux procédés de suivi radial de pistes ont été décrits dans l'art connu. Lorsqu'il s'agit d'enregistrer des informations sous forme séquentielle, par exemple des informations vidéo, généralement les pistes ne sont pas matérialisées à l'avance mais plutôt créées en temps réel au moment de l'enregistrement. L'information est enregistrée le long des pistes ayant la forme d'une spirale unique s'étendant de la zone périphérique du disque vers une zone centrale ou l'inverse, ou encore ayant la forme de cercles concentriques centrés sur l'axe de rotation du disque.

Dans les systèmes les plus simples, on compte sur la précision des organes d'avance de la tête d'enregistrement pour créer cette piste. Lors de la lecture, des informations, enregistrées par exemple sous la forme de micro-reliefs, interfèrent avec un faisceau de lecture focalisé dans le plan de la face d'enregistrement du disque. Le défilement de ces micro-reliefs sous la tache de focalisation module le faisceau et cette modulation est détectée à l'aide de cellules photoélectriques convertissant les variations d'intensité lumineuse en signaux électriques. Ces signaux électriques peuvent être également utilisés dans un but de suivi de pistes.

Le procédé qui vient d'être décrit nécessite que l'avance de la tête d'enregistrement doit présenter une très grande stabilité mécanique, ce pour éviter que deux sillons successifs ne se chevauchent ou du moins soient mal discernables lors de la lecture. Dans un but d'améliorer le système qui vient d'être décrit, il a été proposé dans la demande de brevet français publiée sous le numéro 2 366 636, un procédé utilisant la dernière piste inscrite ou l'une des pistes précédemment inscrite comme référence. Il est adjoint au système d'avance mécanique de la tête d'enregistrement un système de déflexion optique de la tache d'enregistrement. La tache de lecture est astreinte à suivre un sillon déjà inscrit de la piste par un asservissement de position classique. A l'aide du système de déflexion optique, la tache d'enregistrement est maintenue à une distance constante, et égale à un multiple entier du pas de la piste, de la tache de lecture.

Cependant, lorsque l'on désire enregistrer des informations de façon aléatoire, par exemple dans les applications concernant l'informatique, il n'est plus possible d'utiliser les procédés qui viennent d'être décrits ou des procédés analogues. Il est en général nécessaire de matérialiser à l'avance les pistes devant lesquelles des informations peuvent être enregistrées. Pour ce faire, il est d'usage de créer une prégravure sous quelque forme que ce soit. Dans un exemple de réalisation décrit dans la demande de brevet français publié sous le numéro 2 365 854, lors de la fabrication du support, les pistes sont matérialisées sous la forme d'un sillon lisse créé dans une couche auxiliaire de ce support. Ces pistes peuvent être détectées même en l'absence de tout enregistrement d'information, cet enregistrement étant effectué dans une phase ultérieure dans une couche photosensible ou thermosensible en contact avec la couche auxiliaire.

Dans une variante préférée de l'art connu, les pistes prégravées peuvent être confondues avec les régions dans lesquelles sont enregistrées les informations. On obtient alors un système dit mono-piste.

Dans d'autres procédés, la piste ou les pistes prégravées sont distinctes des pistes le long desquelles sont enregistrées les informations. On obtient alors des systèmes dits bi-pistes. Pour discriminer ces deux types de pistes, on peut faire en sorte que la prégravure consiste en un signal décomposable dans un premier spectre de fréquences et l'information décomposable dans un second spectre de fréquences disjoint. Lors de l'écriture, on peut utiliser le faisceau de lecture pour suivre la piste prégravée comme dans la seconde demande de brevet français précitée.

Le principal inconvénient du procédé qui vient d'être décrit est qu'il ne permet pas une densité d'enregistrement maximale puisqu'il nécessite, au minimum, une piste supplémentaire de prégravure pour une piste d'information prégravée. En outre, il nécessite l'utilisation de deux faisceaux, l'un pour le suivi radial de la piste prégravée et l'autre pour l'écriture ou la lecture d'informations sur la piste destinée à l'enregistrement.

Les supports du type dit mono-piste, comportant une prégravure, par exemple tels que ceux décrits dans la demande de brevet japonais J.A. 5 622 227, ne sont pas non plus exempts d'inconvénients. Ils nécessitent généralement l'utilisation de deux faisceaux, l'un d'enregistrement et l'autre de suivi radial. En outre, si la piste prégravée est facilement discernable du restant du disque (zones interpistes) en l'absence d'enregistrement d'information, il n'en est plus de même lorsque des informations sont enregistrées. Il peut en résulter si des précautions ne sont pas prises, des inversions de contrastes conduisant à des erreurs de suivi.

Aussi, pour pallier ces inconvénients, il est proposé dans la demande de brevet européenne déposée par la Demanderesse, le même jour que la présente demande sous le N° 83 400 427.7 (EP-A-89 263), un dispositif de suivi radial mettant en œuvre un support d'information comportant une prégravure utilisée pour le suivi radial de piste constituée uniquement par des «drapeaux» répartis régulièrement ou non le long des pistes.

Selon cette demande de brevet, le prégravure est constituée d'une suite d'éléments discrets non contigus matérialisant l'axe moyen des pistes. La répartition spatiale de ces éléments discrets peut être uniforme ou non. Selon une première variante, chaque élément discret comporte plusieurs tronçons définissant un code particulier. Selon des variantes supplémentaires, chaque élément comporte, outre une portion centrée sur l'axe moyen des pistes, une ou plusieurs portions décalées par rapport à l'axe moyen. Enfin, chacune des prégravures peut être elle-même précédée d'un élément de prégravure auxiliaire utilisé dans un but de synchronisation. Le dispositif de suivi de piste comprend des moyens photo-détecteurs, des circuits de mesure comportant des échantillonneurs-bloqueurs ou des circuits intégrateurs à mémoire et des circuits d'échantillonnage. Un signal d'erreur de suivi radial de piste est élaboré à partir de l'évolution des signaux détectés lors de passages successifs dans une zone éclairée de la surface du disque par une tache de suivi de piste.

Outre le suivi radial correct assuré par le procédé préférentiel qui vient d'être rappelé, une seconde exigence associée à la lecture ou l'écriture d'information sur un support optique, concerne la focalisation du ou des faisceaux d'énergie lumineuse mise en œuvre. Ces faisceaux doivent être focalisés sur le support en une tache qui doit suivre en permanence les fluctuations éventuelles de niveau des pistes.

Pour ce faire, il est connu que la focalisation correcte du faisceau est obtenue le plus souvent au moyen d'un dispositif d'asservissement de focalisation comportant une boucle de rétroaction maintenant constante la distance entre le dispositif optique et la surface gravée du support. L'accrochage et le maintien du dispositif d'asservissement sont obtenus par détection des fluctuations d'un signal électrique dérivé dans une première variante, de la lecture des informations enregistrées et, dans une seconde variante, de la détection de la prégravure matérialisant les pistes, par exemple sous forme d'un sillon lisse.

On se trouve alors confronté aux mêmes difficultés que précédemment rappelées en relation avec le suivi radial.

L'invention se fixe pour but de pallier les inconvénients de l'art connu et propose un support d'information et des dispositifs mettant en œuvre un tel support pour réaliser le suivi radial ou la focalisation tout en s'affranchissant des difficultés dues aux pertes de contraste dans les systèmes classiques.

L'invention a donc pour objet un support d'information comprenant dans au moins une surface de référence optiquement enregistrable un ensemble d'éléments de piste adjacents le long desquels est agencée une suite de sites non contigus dédiés au stockage de l'information sous une forme optiquement lisible, lesdits sites de stockage étant séparés l'un de l'autre par des sites intercalaires comprenant des motifs pour matérialiser l'axe moyen non sinueux desdits éléments de piste, lequel représente la trajectoire idéale que doit suivre le moyen transcripteur de ladite information; lesdits motifs se présentent sous la forme discrète et prégravée de portions non contiguës à contours fermés de ladite surface de référence, caractérisé en ce que lesdits motifs sont des motifs rangés selon deux alignements hors d'axes qui matérialisent la position transverse dudit axe moyen par un encadrement symétrique; chaque site intercalaire renfermant au moins l'un desdits motifs de prégravure; la loi de répartition desdits motifs de prégravure entre lesdits alignements étant telle qu'un motif de prégravure occupant l'un des alignements dans l'un des sites intercalaires a pour correspondant un motif de prégravure occupant l'autre alignement dans le site intercalaire immédiatement voisin à l'exclusion de tout motif de prégravure centré sur l'axe; ladite loi de répartition étant une loi indexée au moyen d'au moins une structure codifiée récurrente réunissant au moins deux motifs de prégravure, les motifs de prégravure étant tels que leur longueur et/ou leur répartition spatiale représente un code sélectivement détectable.

L'invention a encore pour objet des dispositifs optiques pour la focalisation et/ou le suivi radial, les dispositifs optiques pour la focalisation pouvant être utilisés soit avec un support d'information tel que défini ci-dessus ou tel que décrit dans la demande de brevet européen déposée par la Demanderesse, le même jour que la présente demande sous le N° 83 400 427.7 (EP-A-089 263).

L'invention sera mieux comprise et d'autres caractéristiques apparaîtront à l'aide de la description qui suit en référence aux figures annexées et parmi lesquelles:

— la figure 1 représente un disque de l'art connu et un dispositif de suivi de piste sur un tel disque et de focalisation;

— les figures 2 et 5 représentent une prégravure de disque selon plusieurs variantes de réalisation conformes à l'invention;

— les figures 6 et 7 représentent les schémas électriques de dispositifs de suivi radial de piste selon plusieurs variantes d'exécution conformes à l'invention;

— les figures 8 et 9 sont des diagrammes explicatifs du fonctionnement des dispositifs;

— la figure 10 représente les éléments essentiels d'un dispositif de focalisation conforme à l'invention:

— les figures 11 et 13 sont des diagrammes explicatifs du fonctionnement de ce dispositif;

— la figure 14 représente un schéma électrique d'un dispositif permettant suivant une variante préférée de l'invention, simultanément le suivi radial de piste et la focalisation.

L'invention concernant un support d'information et un dispositif de suivi radial d'une des pistes sur un support d'informations de type prégravé ainsi que la focalisation, il est utile de rappeler les éléments constitutifs principaux d'un système enregistreur et/ou lecteur de supports d'informations, notamment de supports en forme de disques lisibles et inscriptibles optiquement.

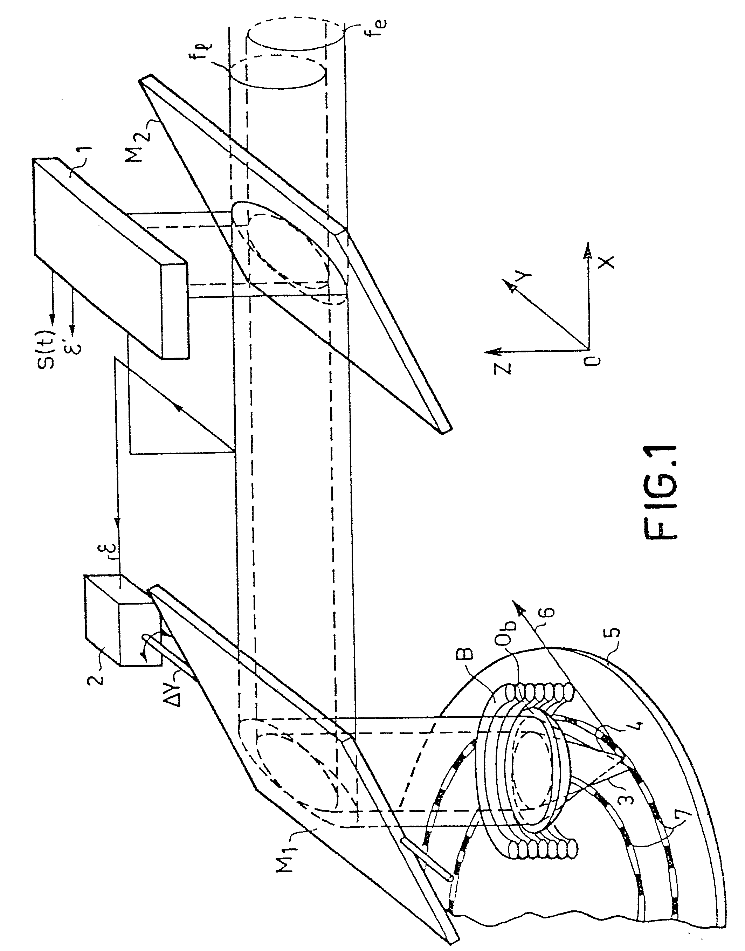

La figure 1 représente un support d'information 5 de l'art connu en forme de disque circulaire pouvant tourner dans un plan XOY autour d'un axe parallèle au troisième axe d'un trièdre de référence XYZ. La face inférieure de ce disque est ici supposée lisse; la face supérieure qui lui est parallèle est également lisse, mais comporte une piste prégravée 7 sous forme d'une piste lisse dont la largeur sensiblement constante est de l'ordre ou inférieure au micromètre.

On peut utiliser un tel disque, soit pour inscrire des informations en un point déterminé d'une des pistes lisses inscrites au préalable, soit pour lire des informations inscrites en un point quelconque de cette piste. Le disque, par exemple d'un diamètre d'environ 30 cm, est animé d'un mouvement de rotation communiqué par un moteur d'entraînement solidaire du châssis du système optique d'enregistrement-lecture. Dans cet exemple de réalisation, le dispositif d'accès à une piste prédéterminée du disque comprend une partie fixe comprenant deux sources d'énergie lumineuse (non représentées sur la figure 1) et une partie mobile constituée par la tête d'enregistrement-lecture. Comme il est connu, cette dernière comprend un objectif du type microscope $O_b$, solidaire d'une bobine électromagnétique B se déplaçant dans le champ magnétique d'un aimant permanent (non représenté) assurant l'asservissement vertical ou la focalisation et un miroir galvanométrique $M_1$ assurant l'asservissement radial. Les sources d'énergie lumineuse, comme il est également connu, comprennent des sources lasers, par exemple des lasers à gaz He Ne ou semi-conducteurs. Les lasers à gaz délivrent un faisceau parallèle polarisé dont la section est très faible. Le faisceau laser doit être agrandi de façon à recouvrir la pupille d'entrée de l'objectif, ce quelque soit la position de l'objectif le long de l'axe optique. Pour réaliser cette exigence, il a été proposé dans la demande de brevet français FR-A-2 462 758 d'intercaler entre les sources d'énergie lumineuse et la tête d'enregistrement-lecture mobile une optique de type afocal.

Pour la lecture, un faisceau laser $f_1$ parallèle produit par une source laser (non représentée sur la figure 1), est agrandi à l'aide d'un afocal, dont le grossissement est tel que le faisceau émergeant, également parallèle, recouvre la pupille d'entrée de l'objectif $O_b$. Le miroir $M_1$ dévie les rayons se propageant parallèlement à une direction parallèle à l'axe OX. L'objectif $O_b$ focalise le faisceau de lecture au point 3 sur le disque support d'information 5. Ce disque est animé d'un mouvement de rotation symbolisé par la flèche 6. L'objectif et le miroir sont solidaires d'un équipage mobile constituant la tête d'enregistrement-lecture. L'avance de cet ensemble mobile peut être obtenue par tout moyen connu.

On utilise ensuite le même afocal pour le faisceau d'enregistrement $f_e$, lequel ayant été préalablement modulé. Afin de différencier les taches de lecture et d'enregistrement sur le disque, on incline très légèrement le faisceau d'enregistrement $f_e$ par rapport au faisceau de lecture $f_1$ de manière à ce que le décentrement du faisceau d'enregistrement sur la pupille d'entrée de l'objectif soit très limité et à ce qu'on puisse négliger le déplacement du faisceau lors d'un déplacement radial de la tête. Il s'ensuit que quelque soit la position de l'objectif le long de l'axe optique, le faisceau d'écriture est focalisé au foyer de l'objectif. La tache d'écriture est focalisée au point 4.

La prégravure de la piste sous la forme d'un sillon «lisse» 7 peut se présenter sous différents aspects. Il peut s'agir par exemple d'une prégravure en creux, selon un ensemble d'éléments de pistes agencés selon des cercles concentriques ou organisés selon d'une spirale. La largeur des éléments de piste est choisie légèrement inférieure au diamètre de la tache lumineuse et ces éléments sont séparés par des plages interpistes dont la largeur est légèrement supérieure à la largeur de la piste. La surface supérieure du support reçoit une couche mince appropriée à l'inscription par un procédé thermo-optique. Cette disposition d'éléments permet d'explorer la piste avant inscription, car l'interaction de la tache de lecture avec la piste fournit un rayonnement dispersé, alors que les plages interpistes ne sont pas génératrices de dispersion.

En ce qui concerne la phase d'enregistrement du disque, l'insolation de la couche sensible servant à l'inscription est effectuée par une tache dont l'intensité est modulée par exemple par un signal électrique en créneaux de largeurs variables ou constantes selon les applications qui constituent le support de l'information. L'incorporation de l'information dans le signal modulateur est effectuée selon le cas, par modulation de fréquence ou de phase, ou par tout mode de codage capable de fournir un message codé par impulsions; l'information peut aussi être elle-même directement le signal modulateur.

Pour détecter les faisceaux de lecture réflèchis par le disque, on interpose, par exemple, une lame semi-transparente $M_2$ sur le trajet du faisceau $f_1$. Le faisceau réfléchi est alors envoyé vers des moyens photo-détecteurs et de traitement de signal qui peuvent délivrer d'une part un signal d'erreur qui permet de commander le moteur 2 permettant de piloter la position du miroir $M_1$, en réalisant ainsi un asservissement radial, d'autre part un signal d'erreur E', qui permet de commander la bobine B solidaire de l'objectif OB en réalisant ainsi un asservissement de focalisation. Toutes ces techniques sont bien connues de l'homme de métier et sortent du cadre de l'invention.

Les moyens de traitement peuvent délivrer aussi un signal S(t) représentatif des informations utiles enregistrées sur le disque. En effet lors du défilement des éléments enregistrés sur les pistes 7, on recueille en lecture un signal S(t) qui traduit fidèlement les variations temporelles du signal enregistré sur la piste.

En phase écriture, le faisceau de lecture $f_1$ est utilisé pour assurer l'asservissement radial à l'aide de la prégravure mais peut également être utilisé dans un but de contrôle en temps réel de l'information en cours d'enregistrement ou «monitoring» selon l'expression anglo-saxonne couramment utilisée.

Bien que ne nécessitant qu'une surface correspondant à la largeur d'une seule piste, par contraste aux procédés qui mettent en œuvre une ou

deux pistes prégravées adjacentes ou encadrant la piste utile, le procédé de l'art connu qui vient d'être rappelé en relation avec la figure 1, présente cependant des inconvénients.

Tout se passe, du point de vue détection, comme si pour certains matériaux thermosensibles connus les pistes étaient plus sombres que les zones interpistes. Tout écart de suivi de piste peut donc être facilement détecté grâce à ce contraste à d'amplitude. Lorsque la couche recouvrant le support est soumise au rayonnement inscripteur, les zones inscrites peuvent être éclaircies pour certains matériaux photosensibles, ce qui contribue à créer un bon contraste le long de la piste. Cependant ces zones éclaircies tendent à se confondre avec la densité plus faible des zones interpistes avoisinants, ce qui fait perdre radialement le contraste nécessaire pour assurer un bon suivi de piste.

Pour d'autres matériaux, on constate l'effet inverse: les zones interpistes sont plus sombres que les pistes mais il y a également perte de contraste lors de l'inscription.

On voit donc que l'inscription nuit au bon repérage radial des pistes dans toutes les zones où la couche a emmagasiné des données.

Ces inconvénients limitent fortement les choix technologiques quant aux médias possibles.

En outre deux faisceaux différents doivent être mis en œuvre, au moins pendant les périodes d'inscription: un faisceau d'écriture et un faisceau de lecture et/ou de suivi radial.

Pour s'affranchir de ces limitations, il est proposé dans une demande de brevet français précitée N° 8 294 214 d'utiliser, aux fins de l'asservissement radial, une prégravure d'un type particulier.

Dans cette demande de brevet, il est proposé un disque optique de type prégravé permettant, entre autres avantages, simultanément, une configuration monopiste et ne nécessitant l'utilisation que d'un seul faisceau, ce sans interférence de la prégravure avec la gravure représentant l'information utile.

Selon la caractéristique principale de l'invention, la prégravure se présente sous la forme d'éléments discrets ou drapeaux qui seuls définissent l'axe moyen de la piste à suivre. Cette piste est donc virtuelle. Compte tenu de la vitesse de rotation du disque, la répartition spatiale de ces éléments de prégravure doit être suffisante pour satisfaire le critère de SHANNON: typiquement sur un disque de 30 cm de diamètre, dont une couronne de largeur 8 cm représente la zone utile d'enregistrement, 40 000 pistes environ sont disponibles et comportent chacune de l'ordre de 3 500 drapeaux.

Dans ce qui suit, l'enregistrement de données numériques étant l'application principale envisagée dans le cadre de la présente invention, ce sans être limitatif, il sera décrit un support sur lequel les pistes sont réparties selon des cercles concentriques et équidistants.

L'information utile est enregistrée entre deux drapeaux successifs. Dans ce cadre, si l'on désire une configuration d'enregistrement sous forme de bloc la répartition spatiale des drapeaux est de façon préférentielle uniforme.

L'utilisation de prégravure discrète permet de s'affranchir des difficultés liées au suivi radial.

En effectuant un choix parmi les variantes de réalisation proposées dans la demande de brevet sus-mentionnée, et qui seront détaillées dans ce qui suit, il est également possible d'obtenir des informations nécessaires à une focalisation correcte du faisceau, ou asservissement vertical, à partir de ces mêmes drapeaux.

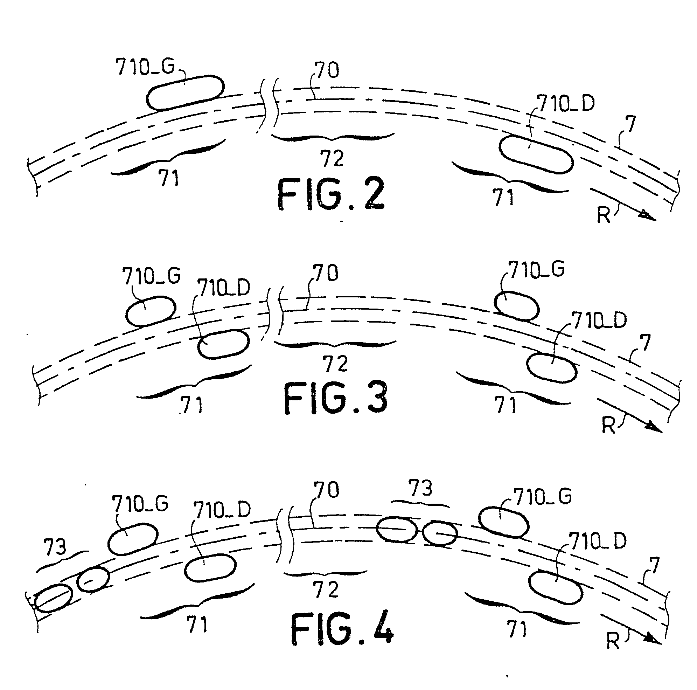

La figure 2 illustre un premier exemple de drapeau utilisable dans le cadre de la présente invention. La prégravure se présente sous la forme de tronçons de pistes lisses 71 définissant l'axe moyen 70 de pistes le long desquelles peuvent être enregistrées les informations. Entre deux drapeaux 71, il existe une zone 72, vierge de toute information avant enregistrement. Le sens de rotation du disque a été représenté sur la figure 2 par la flèche R.

Il doit bien être entendu que la piste 7 représentée sur la figure est une piste virtuelle dont l'axe moyen 70 représente la trajectoire idéale que doit suivre un faisceau d'écriture.

Pour être utilisable dans le cadre spécifique de la présente invention, les drapeaux ont pour caractéristique commune de comporter chacun au moins un tronçon de prégravure décalé par rapport à l'axe moyen 70 des pistes 7, ce de façon à ce que deux tronçons décalés successifs soient disposés de part et d'autre de cet axe.

Dans une première variante, la plus simple, illustrée par la figure 2, un premier drapeau 71 comporte un tronçon 710-G décalé à gauche de l'axe moyen de la piste. Le drapeau suivant 71' comporte un tronçon 710-D décalé à droite de l'axe. Cette succession est répétée. L'écart entre les tronçons décalés et l'axe 70 de la piste est de l'ordre d'une fraction de la largeur de la tache de suivi.

Dans une seconde variante, chaque drapeau comporte au moins un tronçon décalé à gauche et un tronçon décalé à droite. Cette variante est illustrée par la figure 3.

Il peut être avantageux d'associer au drapeau principal 71, comprenant des tronçons décalés de part et d'autre de l'axe moyen 70, un deuxième drapeau 73 utilisé pour générer un signal de synchronisation ou d'identification de début de drapeau. De façon préférentielle le drapeau 73 représente un code particulier qui permet de l'identifier sélectivement par rapport aux autres informations enregistrées. Une telle configuration est illustrée par la figure 4.

La manière précise dont les informations sont enregistrées sort du cadre de l'invention. Tout procédé connu peut être utilisé. Les drapeaux 71, 71' et les informations utiles enregistrés dans les zones 72 peuvent, pour fixer les idées et sans que cela soit limitatif, être constitués de microreliefs en creux ou en bosse, par exemple par ablation d'une couche superficielle à l'aide du faisceau laser d'écriture. De manière préférentielle, les portions de drapeaux ont tous la même largeur et les portions décalées 710-G et 710-D ont même longueur et même décalage.

Toutes variations et combinaisons à partir de configurations de base des drapeaux reste dans le cadre de l'invention. Notamment, chaque drapeau 71 (ou 71') peut comporter plus d'un tronçon décalé dans le même sens, à droite et/ou à gauche.

En outre, les zones 72 réservées à l'enregistrement de données d'information utile peuvent être également prégravées sous forme d'un sillon lisse, ce dans un but d'améliorer le contraste en fonction de la couche de matériau thermo-sensible utilisé.

L'invention présente donc la caractéristique fondamentale de décaler alternativement les zones comprenant des enregistrements destinés à être utilisés par les moyens d'asservissement radial et vertical (ou focalisation).

En ce qui concerne l'asservissement radial, les signaux qui sont dérivés de la détection des tronçons décalés permettent par comparaison l'obtention d'un signal d'erreur. Ce procédé peut se rapprocher de la méthode dite de «wobbulation de la tache de suivi» par laquelle on imprime au faisceau de suivi une oscillation radiale haute fréquence d'amplitude constante autour d'une position moyenne centrée sur l'axe moyen de la piste lorsque l'erreur de suivi est nulle. Elle présente cependant l'avantage que l'amplitude du déplacement relatif tache-piste n'est pas limitée par le taux de modulation du signal haute fréquence lu. Typiquement l'amplitude crête de l'oscillation est d'environ 0,2 μm, ce pour des pistes dont la largeur est de l'ordre de 1 μm.

Dans le cadre de l'invention, l'amplitude de l'oscillation équivalente due au décalage peut être beaucoup plus importante et n'est limitée que par la taille de la tache de lecture. La modulation d'amplitude engendrée par le décalage des tronçons n'affectant pas le signal haute fréquence des informations post-gravées.

La comparaison de deux signaux dérivés des détections successives de deux tronçons décalés en sens opposé, se fait par échantillonnage, à condition de connaître le rythme de défilement de ces tronçons dans la tache, c'est-à-dire de pouvoir différencier ces tronçons. Cette différenciation peut s'effectuer selon trois méthodes principales.

Selon la première méthode chaque tronçon est reconnaissable par sa forme qui indique s'il est à droite ou à gauche de l'axe moyen 70. Au lieu d'un tronçon unique, on peut enregistrer plusieurs tronçons dont les longueurs respectives et/ou la répartition spatiale représente un code sélectivement détectable. On peut encore associer, à chaque drapeau 71, de façon analogue à ce qui est réalisé dans la configuration représentée à la figure 4, un drapeau supplémentaire représentant un code indiquant le sens du décalage du tronçon qui suit ou éventuellement qu'il existe une succession de tronçons décalés de part et d'autre de l'axe moyen 70. Les amplitudes relatives des signaux dérivés de la détection de deux tronçons à décalage opposés par des moyens opto-électroniques qui seront détaillés dans ce qui suit peuvent ainsi être comparés sans ambiguïté.

Selon la seconde méthode, le support d'information est sectorisé. Par exemple, dans le cas d'un disque, on prévoit typiquement seize secteurs par tour. On enregistre alors, selon cette variante, un drapeau prégravé de configuration particulière qui permet de détecter le début d'un secteur.

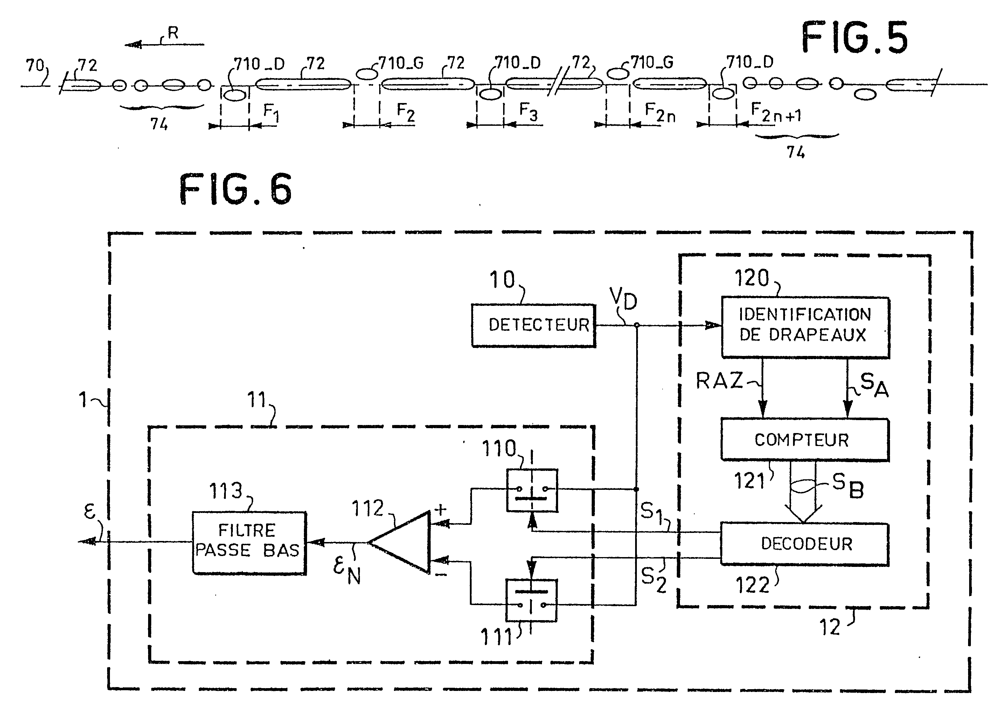

Une telle disposition est illustrée par la figure 5. Le début de chaque secteur est repéré par un drapeau codé 74 suivi d'une succession répétitive: par exemple tronçon droit 710-D, zone d'enregistrement de données d'informations utiles 72, tronçon gauche 710-G. Ces différents tronçons décalés alternativement dans un sens et dans l'autre, définissent deux suites de fenêtres d'analyses, respectivement $F_1$, $F_3$, ..., $F_{2n+1}$ et $F_2$, $F_4$, ..., $F_n$, (2n + 1) étant le nombre total de fenêtres d'analyses, c'est-à-dire le nombre total de tronçons décalés 710-D et 710-G. Dans l'exemple illustré par la figure 5, les zones 72 sont constituées de tronçons de sillons lisses avant enregistrement. Dans une autre variante de réalisation, comme dans le cas des configurations illustrées par les figures 2 à 4, les zones 72 peuvent être confondues avec les zones interpistes avant enregistrement.

Le signal d'erreur de suivi radial est obtenu en intégrant le signal détecté par des moyens opto-électroniques pendant les fenêtres d'analyse $F_1$ à $F_{2n+1}$, d'une part, et $F_2$ à $F_{2n}$, d'autre part, et en les comparant.

Un circuit électronique permettant un fonctionnement d'un dispositif de suivi radial selon cette variante est illustré par la figure 6. Le système d'enregistrement-lecture d'informations sur le disque peut être analogue à celui qui a été décrit en relation avec la figure 1. Les éléments identiques ne seront pas décrits à nouveau. Seul le circuit repéré 1, élaborant le signal d'erreur de suivi radial et de focalisation est spécifique.

Il comprend un organe opto-électronique de détection qui sera décrit en détail ultérieurement. Cet organe comporte au moins un photodétecteur générant un signal de sortie $V_D$ transmis à des circuits 11 d'élaboration du signal d'erreur de suivi radial $\varepsilon$. Ce signal est également transmis à des circuits d'échantillonnage 12 destinés à autoriser le fonctionnement des circuits 11 pendant les seuls intervalles de temps correspondant aux fenêtres d'analyse. Pour ce faire, ces circuits comprennent des circuits d'identification de drapeaux 120, un compteur 121 par exemple de type binaire et un décodeur 122. Les circuits d'identification de drapeaux comprennent un premier circuit détectant le drapeau spécifique de début de secteur 74 (figure 5) et, en réponse, génère un signal RAZ d'initialisation du compteur 121 transmis à une entrée de remise à zéro, et un second circuit détectant le passage des portions décalées 710-D et 710-G et générant à chaque passage un signal $S_A$ d'incrémentation du compteur 121. Sur les différentes sorties de ce compteur sont présentes en permanence les bits d'un mot binaire $S_B$ transmis à un décodeur. Celui-ci génère à chaque incré- mentation des impulsions transmises alternativement sur deux liaisons de commande $S_1$ et $S_2$ activant de commutateur 110 et 111 pendant les fenêtres d'analyse correspondant à la série $F_1$, $F_3$,..., $F_{2n+1}$ et sur la sortie $S_2$ des impulsions définissant des fenêtres d'analyse correspondant à la série $F_2$, $F_4$,..., $F_{2n}$.

Les commutateurs 110 et 111 reçoivent chacun le signal $V_D$ et le transmettent conditionnellement pendant les fenêtres d'analyse à un intégrateur à mémoire 112 comportant deux entrées différentielles (+ et −) de façon à effectuer des comparaisons successives entre les signaux dus aux interactions entre la tache de suivi et respectivement les tronçons décalés à droite et à gauche.

L'identification sélective des tronçons 710-D et 710-G par les circuits 120 peut s'effectuer de différentes manières. On peut par exemple associer chaque tronçon à un drapeau supplémentaire de synchronisation de début d'échantillonnage de façon analogue à ce qui est réalisé dans la configuration de la figure 4 (drapeau 73). On peut également enregistrer plusieurs tronçons 710-D (ou 710-G) dont la répartition et/ou les longueurs respectives définissent un code particulier de tronçon décalé distinct de ceux utilisés pour l'enregistrement des autres données.

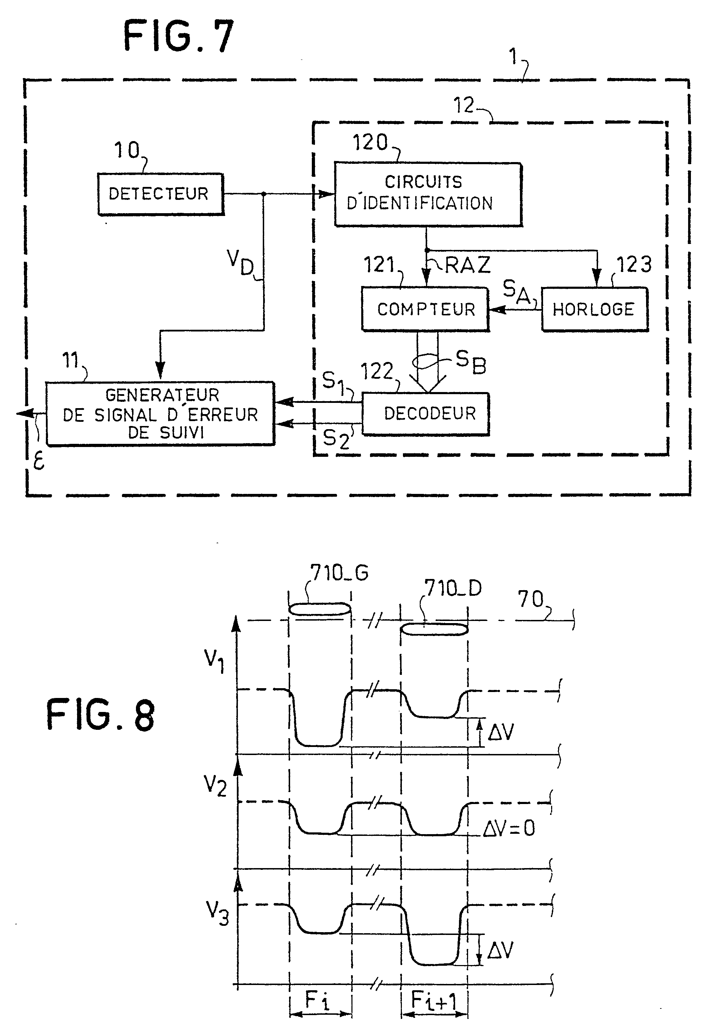

Si la vitesse médium-tête de lecture est suffisamment stable et les longueurs des zones 72 définis avec précision, il suffit, une fois que le compteur 121 est réinitialisé, de générer une suite d'impulsions d'incrémentation à l'aide d'une horloge, par exemple un oscillateur du type à commande par tension (plus connu sous le sigle: de la terminologie anglo-saxonne «V.C.O.». La figure 7 illustre schématiquement cette variante de réalisation. Les éléments identiques à ceux de la figure 6 portent la même référence et ne seront pas redécrits. Le signal RAZ fourni par les circuits 120, qui ne comportent plus qu'un circuit détecteur de début de secteur (drapeau 74), est également transmis à des circuits d'horloge 123 pour en recaler la phase avec le passage du drapeau 74. Ensuite les circuits d'horloge génèrent une suite d'impulsions de fréquence de répétition égale à $1/T$, $T$ étant le temps nécessaire au défilement d'une zone 72 sous la tache d'exploration. Pour éviter tout risque de déphasage trop important qui conduirait à la génération d'une fenêtre d'analyse désynchronisée par rapport au passage des tronçons décalés, il est possible de multiplier le nombre de drapeaux de type 74 par secteur. On obtient alors une configuration typique à titre d'exemple: un drapeau 74 suivi de seize tronçons décalés.

Dans les deux variantes de réalisation décrites en relation avec les figures 6 et 7, il est possible de remplacer le compteur 121 par un registre à décalage ou tout moyen équivalent, enregistrant un «1» logique aux passages des drapeaux 74 et décalant ce bit à chaque passage de tronçons décalés.

Dans les deux variantes de réalisation, le signal en sortie de l'intégrateur $\varepsilon_N$ est un signal en marches d'escalier, l'amplitude de ce signal étant mémorisée entre deux passages de tronçons décalés. Pour être utilisable ce signal doit être «lissé». Pour ce faire, il peut être utilisé un filtre passe-bas 113 sur la sortie duquel est disponible le signal d'erreur de suivi radial $\varepsilon$.

Le diagramme de la figure 8 illustre les trois possibilités caractéristiques de la position de la tache de suivi de piste par rapport à l'axe moyen de la piste 70. Sur la partie supérieure du diagramme, la courbe $V_1$ illustre le cas où la tache de suivi de piste est décalée à gauche de l'axe moyen de la piste, étant entendu que le sens de rotation est celui indiqué par la flèche R sur la figure 5. Dans ce cas, l'interaction du tronçon 710-G sur le faisceau de suivi de piste est plus importante que celle du tronçon 710-D. La courbe $V_1$ présente une variation d'amplitude plus importante, pendant la fenêtre d'analyse $F_i$ ($i$ étant un nombre quelconque compris entre 1 et 2n) qui correspond au passage dans la zone éclairée par la tache de suivi de piste de la portion 710-G, que la variation d'amplitude pendant la fenêtre d'analyse $F_{i+1}$ qui correspond au passage de la portion 710-D. Les différences d'amplitude et de signe entre ces deux signaux $\Delta V$ sont représentatives du sens et de l'amplitude du décalage de la tache par rapport à l'axe moyen de la piste. En dehors de ces fenêtres, le signal fourni par les moyens de détection n'est pas transmis aux circuits 112, les commutateurs étant ouverts.

Dans la partie médiane du diagramme, la courbe $V_2$ illustre le cas ou la tache de suivi de piste est centrée sur l'axe moyen de la piste. Les variations du signal fourni par les moyens de détection 10 dans les fenêtres $F_i$ et $F_{i+1}$ sont identiques.

Sur la partie inférieure du diagramme, la courbe $V_3$ représente le cas où la tache de suivi de piste est décalée à droite par rapport à l'axe moyen 70 de la piste. La valeur des signaux ainsi échantillonnés est ensuite mémorisée jusqu'à la prochaine fenêtre d'analyse. Le circuit 112 fournit sur sa sortie un signal en marches d'escalier $\varepsilon_N$ représentant l'erreur de suivi radial. Pour être réellement exploitable, il est utile de lisser ce signal à l'aide d'un filtre passe-bas 113 dont la sortie fournit l'erreur de suivi radial.

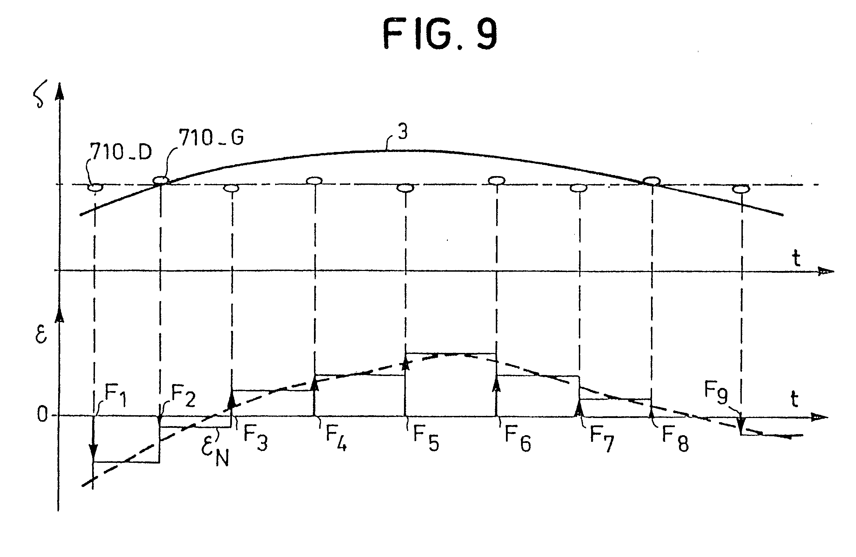

La figure 9 représente un exemple de variation de décalage $\delta$ de la tache de suivi radial 3 par rapport à l'axe moyen 70 d'une piste, ce en fonction du temps. Sur la partie inférieure du même diagramme, il est représenté la variation correspondante du signal d'erreur $\varepsilon$ en fonction du temps par la courbe en pointillés. La variation du signal numérique erreur de suivi radial $\varepsilon_N$ est également représentée sur ce même diagramme. Ce dernier signal varie au rythme du passage des tronçons des drapeaux décalés sous la tache de suivi radial et il reste constant entre deux passages successifs.

Selon la troisième méthode, proche de la deuxième qui vient d'être décrite, on enregistre entre deux zones 72 un drapeau comprenant au moins une paire de tronçons à décalage inverse. La configuration est celle déjà décrite en relation avec la figure 3.

Comme précédemment ces drapeaux peuvent être auto-identifiables ou associés à des drapeaux supplémentaires codés, de façon analogue à la configuration décrite en relation avec la figure 4.

Selon cette méthode, les circuits de mise en œuvre se trouvent simplifiés car il n'est plus nécessaire de distinguer entre les deux suites de fenêtres d'analyse. Il suffit à chaque passage de drapeau de transmettre, le signal $V_D$ alternativement aux entrées différentielles de l'intégrateur 112 à l'aide d'un commutateur à deux voies, ce en relation avec le passage des tronçons décalés successifs.

Enfin, si la vitesse de défilement est suffisamment stable et la longueur des zones 72 bien définie, il est également possible d'omettre les détecteurs de drapeaux et de synchroniser la génération de fenêtres d'analyse à l'aide d'une horloge extérieure, qui peut être dérivée de celle classiquement utilisée pour fournir des signaux de synchronisation lors de l'écriture et/ou la lecture des données d'informations utiles. La fréquence de répétition est celle dite de fréquence bit, c'est-à-dire égale à l'inverse de l'intervalle de temps nécessaire à l'inscription lecture d'une donnée élémentaire d'information ou bit. On retrouve des situations de position de la tache de suivi analogues à celles illustrées par le diagramme de la figure 8, à cette exception près que les signaux de sorties des moyens opto-électroniques de détection associés aux tronçons décalés en sens inverses sont contigus dans le temps et non situés dans des fenêtres d'analyse séparées par l'intervalle de temps nécessaire au défilement, dans la tache de suivi, de la zone 72 inter-drapeaux.

Dans toutes les variantes qui viennent d'être décrites, on peut remplacer l'intégration (figure 6: intégrateur 112) par une détection crête ou un échantillonnage-blocage, également suivis d'une comparaison d'une impulsion à l'autre, génération d'un signal en marches d'escalier $\varepsilon_N$ et lissage pour obtenir le signal définitif $\varepsilon$.

Selon une caractéristique fondamentale de l'invention, les drapeaux peuvent être également utilisés pour générer les signaux d'erreur de focalisation nécessaires à l'asservissement vertical de la tête d'écriture et/ou lecture.

Pour ce faire, il faut placer deux cellules photo-détectrices de part et d'autre de l'axe optique de l'objectif de focalisation.

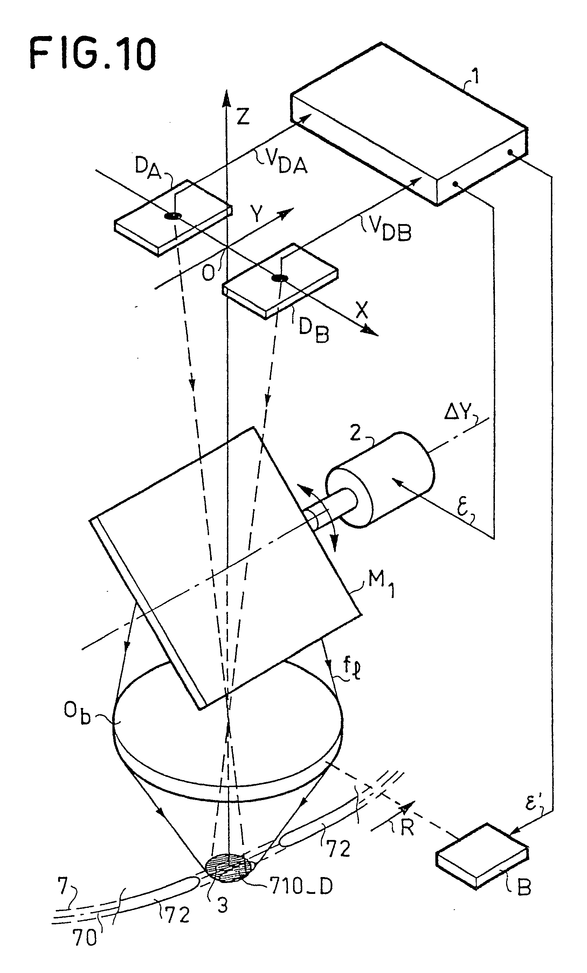

La figure 10 illustre schématiquement une telle configuration réduite à l'essentielle. Un faisceau d'exploration qui peut être le faisceau de lecture $f_1$ du dispositif de la figure 1 est focalisé en une tache d'exploration 3 sur l'axe moyen 70 de la piste 7. On suppose dans l'exemple illustré que le suivi radial est correctement réalisé par un des dispositifs qui viennent d'être décrits. On retrouve également les principaux éléments décrits en relation avec la figure 1: objectif de focalisation $O_b$, solénoïde de focalisation B entraînant l'objectif, miroir de suivi radial $M_1$ entraîné par un moteur 2 autour de l'axe $\Delta Y$ sous la commande du signal d'erreur de suivi radial $\varepsilon$; tous éléments qui ne seront pas redécrits.

On trouve également sur la figure, deux photo-diodes $D_A$ et $D_B$ de part et d'autre de l'axe Z, passant par l'axe optique de l'objectif $O_b$. Ces diodes sont disposées dans un plan XOY parallèle au plan du disque portant la piste 7 et de part et d'autre de l'axe OX parallèle à la direction R, direction moyenne de défilement de la prégravure dans la tache d'exploration 3.

Bien que représenté au-dessus du miroir $M_1$, ici semi-transparent, il doit être bien entendu que les photodiodes peuvent être solidaires des circuits 1 tels que représentés sur la figure 1, ce par un jeu de miroirs de renvoi $M_1$ et $M_2$. Ces photodiodes peuvent encore être situées sous le disque, si celui-ci est lu par transparence. Les signaux de sortie des photodiodes sont transmis aux circuits électroniques de traitement compris dans les circuits 1 et qui seront explicités ultérieurement.

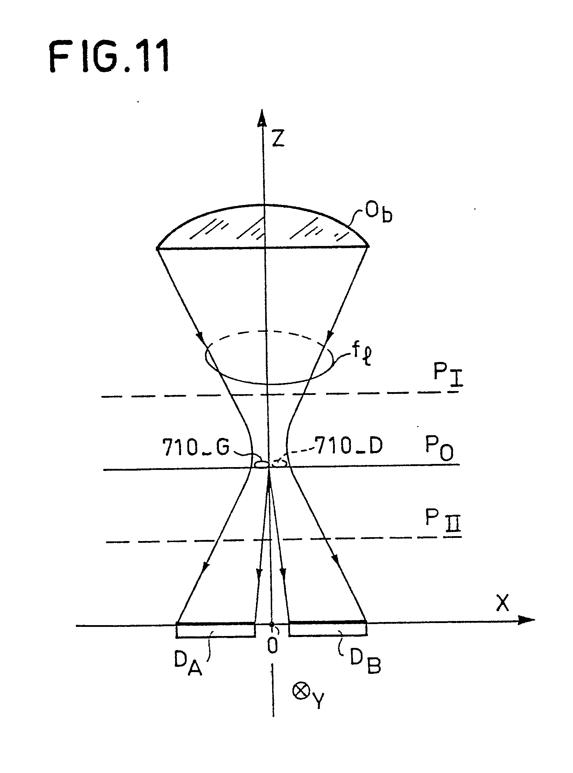

Le procédé va être décrit de façon plus détaillée à l'aide des diagrammes des figures 11 à 9. On suppose, pour fixer les idées, que l'on se place dans le cas d'une prégravure telle qu'elle a été illustrée par la figure 5: tronçons alternés à droite et à gauche, d'une zone de prégravure à l'autre.

Si la focalisation est correcte, le faisceau d'exploration $f_1$ incident étant supposé parallèle, celui-ci est focalisé au foyer de l'objectif dans le plan $P_0$ confondu avec le plan du disque comprenant la piste 7 à suivre. Dans ce cas, la prégravure, par exemple le tronçon décalé à gauche 710-G, interfère avec le faisceau $f_1$ et il s'ensuit, d'après les lois de l'optique, une diffraction produisant des ordres d'interférences répartis symétriquement par rapport au plan ZOY. L'énergie refractée est détectée en parts égales par les photodiodes $D_A$ et $D_B$. Il en sera de même lors du passage du prochain tronçon décalé 710-D et ainsi de suite.

Par contre si on se place en dehors du plan de focalisation, la symétrie n'est plus respectée. Selon que le tronçon de prégravure est décalé à droite (710-D) où à gauche (710-G), l'effet de l'un des demi-faisceaux, c'est-à-dire les parties du faisceau $f_1$ à droite ou à gauche du plan de symétrie ZOY, devient prépondérant. Il s'ensuit également que l'énergie détectée par les cellules $D_A$ et $D_B$ n'est plus identique selon le tronçon de prégravure défilant dans le faisceau d'exploration.

Si la piste 7 à suivre est comprise dans un plan $P_1$ compris entre l'objectif et son foyer (plan $P_0$), les signaux détectés par la photodiode $D_A$ dus aux tronçons décalés à droite (710-D) sont plus importants que ceux détectés par la photodiode $D_B$. L'inverse se produit lors du passage d'un tronçon décalé à gauche (710-G).

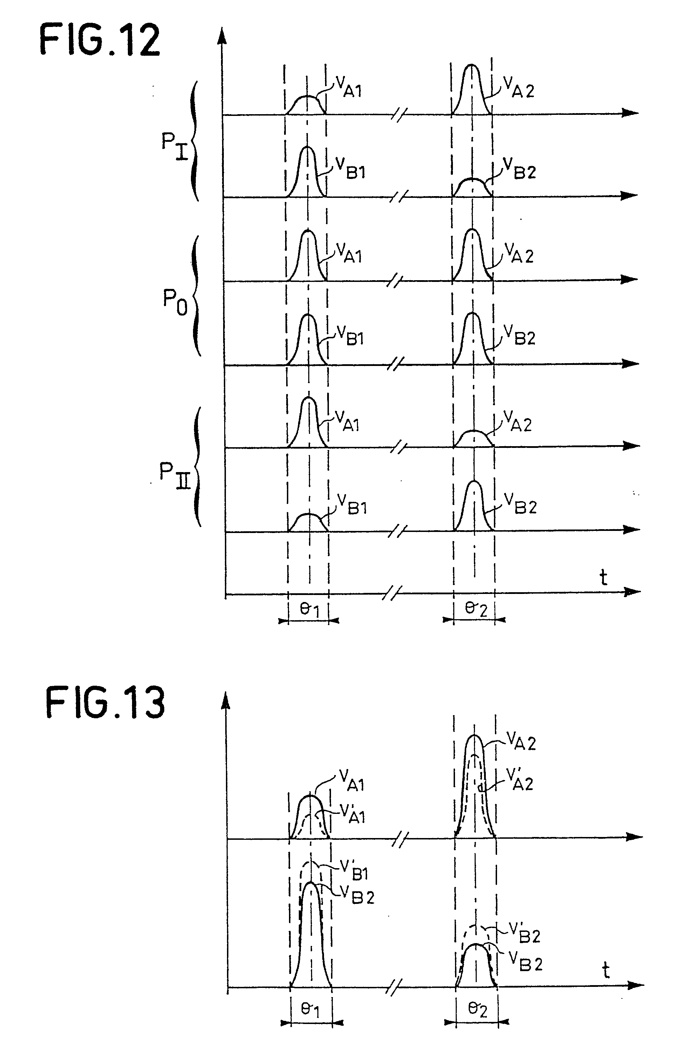

Si la piste 7 à suivre est comprise dans un plan $P_{II}$ plus éloigné de l'objectif que le plan $P_0$, on observe des effets en tous points complémentaires à ce qui vient d'être décrit. Les trois cas sont rassemblés sur le diagramme de la figure 12. Les fenêtres d'analyse $\Theta_1$ et $\Theta_2$ sont déterminées par le temps de passage des tronçons décalés dans la tache d'exploration conformément aux procédés qui ont été décrits en relation avec la détermination de l'erreur de suivi radial. Plus précisément dans le cadre de l'exemple choisi de la manière décrite en relation avec le dispositif de la figure 6. Pour déterminer le signal d'erreur de focalisation $\varepsilon'$, on intègre ou échantillonne les signaux détectés $V_A$ et $V_B$ pendant les fenêtres $\Theta_1$: respectivement $V_{A1}$ et $V_{B1}$;
et $\Theta_2$: respectivement $V_{A2}$ et $V_{B2}$;
et on effectue l'opération algébrique:
$$(V_{A1} + V_{B2}) - (V_{A2} + V_{B1}) \quad (1)$$
le résultat est proportionnel au signal d'erreur de focalisation, en signe et en amplitude.

Outre l'avantage notamment de pouvoir s'affranchir de l'influence des variations de contrastes dues à l'enregistrement de données d'informations utiles le long des pistes, matérialisées ou non par une prégravure (sillon lisse par exemple), influence qui a été précédemment rappelée, le procédé selon la présente invention, qui consiste à dériver aussi les signaux d'erreur de focalisation de drapeaux non contigus, présente un avantage supplémentaire à savoir de ne pas nécessiter de réglages précis du positionnement des cellules, ce positionnement étant généralement de mise en œuvre délicate.

En effet, si pour une raison quelconque les cellules sont décalées par rapport à l'axe OZ (figure 10), l'une des photodiodes, par exemple la photodiode $D_A$ détecte, tous autres facteurs restant constants, moins d'énergie, l'autre, $D_B$, reçoit dans ce cas plus d'énergie. Ce cas est illustré par le diagramme de la figure 13.

Si $V_{A1}$ à $V_{B2}$ sont les impulsions détectées au positionnement correct des photodiodes et $V'_{A1}$ à $V'_{B2}$ les impulsions détectées au positionnement réel, quelque soit l'état de la focalisation, les relations suivantes sont vérifiées:
$$V_{A1} > V'_{A1} \quad (2)$$
$$V_{A2} > V'_{A2} \quad (3)$$
$$V_{B1} < V'_{B1} \quad (4) \text{ et}$$
$$V_{B2} < V'_{B2} \quad (5)$$
Si on effectue le calcul selon la relation (1), il s'ensuit qu'il y a compensation totale ou au moins partielle et que le signal d'erreur de focalisation varie peu même s'il y a décentrement de la paire de photodiodes $D_A$ et $D_B$. Dans la majorité des cas, il est possible d'omettre tout organe de réglage à l'exception d'un réglage de position initial effectué une fois pour toute.

Bien que les procédés de génération de signaux d'erreur de suivi radial et d'asservissement vertical ou focalisation à partir de détections de prégravures discrètes non contiguës puissent être mis en œuvre de façon autonome, selon une variante de réalisation préférée de l'invention ces deux asservissements sont réalisés simultanément. Pour ce faire, dans le cadre de l'exemple choisi, le dispositif de la figure 6 doit être modifié et complété.

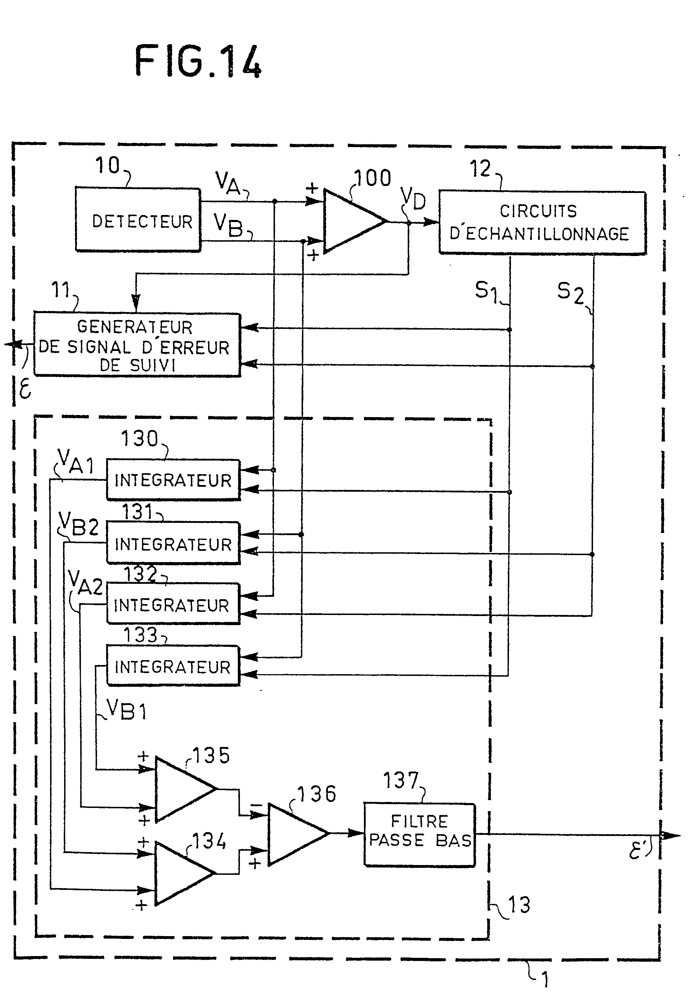

Un dispositif de ce type permettant la focalisation correcte est illustré schématiquement par la figure 14. Les circuits communs aux figures 6 et 14 portent les mêmes références et ne seront pas décrits à nouveau.

Le détecteur comprenant les deux photodiodes $D_A$ et $D_B$ (figure 10) fournit les deux signaux de sorties $V_A$ et $V_B$. Pour être utilisés par les circuits d'échantillonnage 12 ces signaux peuvent être confondus en un signal unique $V_D$, par exemple, à l'aide d'un amplificateur sommateur 100, signal qui est également transmis comme décrit précédemment aux circuits 11 d'élaboration du signal d'erreur de suivi radial. Ces circuits reçoivent les deux signaux d'échantillonnage $S_1$, et $S_2$ déterminant les fenêtres $\Theta_1$ et $\Theta_2$. Le dispositif comprend en outre des circuits d'élaboration du signal d'erreur de focalisation $\varepsilon'$. Pour ce faire, il peut comprendre, quatre intégrateurs à mémorisation 130 à 133, dont le fonctionnement est autorisé respectivement dans la fenêtre $\Theta_1$ (signal $S_1$) pour les intégrateurs 130 et 132 et dans la fenêtre $\Theta_2$ (signal $S_2$) pour les intégrateurs 131 et 133. Ces intégrateurs fournissent les signaux $V_{A1}$, $V_{B2}$, $V_{A2}$ et $V_{B1}$, respectivement en sortie des intégrateurs 130, 131, 132 et 133. Les sorties des intégrateurs 130 et 131 et les sorties des intégrateurs 132 et 133 sont transmises, par exemple, aux entrées de deux amplificateurs sommateurs de gain unité, respectivement 134 et 135. Les signaux en sorties de ces deux amplificateurs 134 et 135 sont transmis à leurs tours aux entrées différentielles d'un amplificateur 136, par exemple de gain unité, respectivement les entrées « + » et « − », ce qui complète le calcul selon la relation (1). En réalité le signal de sortie est un signal en marches d'escalier $\varepsilon'_N$, les résultats étant mémorisés entre deux calculs. Pour être exploitable le signal $\varepsilon'_N$ doit être «lissé» par un filtre passe-bas 137 dont la sortie fournit le signal d'erreur de focalisation $\varepsilon'$ de type analogique.

L'invention n'est pas limitée aux seuls agencements qui viennent d'être décrits. Notamment des dispositifs permettant simultanément le suivi radial et la focalisation corrects peuvent être obtenus en modifiant et complétant les dispositifs permettant le suivi radial, ce de façon analogue à ce qui a été réalisé pour le dispositif de la figure 5 pour obtenir le dispositif de la figure 14.

La caractéristique fondamentale de l'invention est l'utilisation de prégravures discrètes ou drapeaux dont au moins un tronçon est décalé par rapport à l'axe moyen des pistes à suivre, la génération d'un signal électrique dérivé de la détection de l'interaction d'un faisceau focalisé avec ces prégravures et le traitement de ce signal à l'aide de circuits électroniques de manière différentiée selon que l'on désire générer un signal d'erreur de suivi radial ou d'asservissement vertical.

Le procédé selon l'invention a pour avantages particuliers de ne nécessiter qu'un réglage grossier de la position des photodétecteurs, de supprimer tout moyen de «wobbulation» extérieur qui s'avère le plus souvent nécessaire lorsqu'on met en œuvre une gravure classique, et de supprimer toute interaction entre l'enregistrement de données d'informations utiles et le suivi radial de piste et la focalisation.

## Revendications

1. Support d'information comprenant dans au moins une surface de référence optiquement enregistrable un ensemble d'éléments de piste adjacents (7) le long desquels est agencée une suite de sites non contigus (72) dédiés au stockage de l'information sous une forme optiquement lisible, lesdits sites de stockages (72) étant séparés l'un de l'autre par des sites intercalaires (71) comprenant des motifs pour matérialiser l'axe moyen non sinueux (70) desdits éléments de piste (7), lequel représente la trajectoire idéale que doit suivre le moyen transcripteur de ladite information; lesdits motifs se présentant sous la forme discrète et prégravée de portions non contiguës à contours fermés de ladite surface de référence, caractérisé en ce que lesdits motifs sont des motifs rangés selon deux alignements hors d'axes qui matérialisent la position transverse dudit axe moyen (70) par un encadrement symétrique; chaque site intercalaire renfermant au moins l'un desdits motifs de prégravure (710G, 710D); la loi de répartition desdits motifs de prégravure entre lesdits alignements étant telle qu'un motif de prégravure occupant l'un des alignements dans l'un des sites intercalaires a pour correspondant un motif de prégravure occupant l'autre alignement dans le site intercalaire immédiatement voisin à l'exclusion de tout motif de prégravure centré sur l'axe; ladite loi de répartition étant une loi indexée au moyen d'au moins une structure codifiée (74) récurrente réunissant au moins deux motifs de prégravure, les motifs de prégravure étant tels que leur longueur et/ou leur répartition spatiale représentent un code sélectivement détectable.

2. Support selon la revendication 1, caractérisé en ce que ladite structure codifiée étant contenue dans chacun desdits sites intercalaires (71), leur distribution spatiale le long desdits éléments de piste (7) est uniforme.

3. Support selon l'une quelconque des revendications 1 et 2, caractérisé en ce que ladite loi de répartition est une loi indexée au moyen de deux structures codifiées récurrentes et distinctes.

4. Support selon l'une quelconque des revendications 1 à 3, caractérisé en ce que ladite structure codifiée comporte au moins un motif de prégravure centré par rapport à l'un au moins desdits alignements.

5. Support selon la revendication 1, caractérisé en ce que, dans un même site intercalaire, ladite structure codifiée est présente sur lesdits deux alignements.

6. Support selon la revendication 5, caractérisé en ce que les sites intercalaires (71) qui renferment ladite structure codifiée (74) encadrent un nombre prédéterminé de sites intercalaires dépourvus de ladite structure codifiée (74).

7. Support selon l'une quelconque des revendications 1 à 6, caractérisé en ce que le support étant en forme de disque, lesdits axes moyens (70) desdits éléments de piste (7) épousent dans ladite surface de référence la forme de cercles ou spires concentriques équidistants.

8. Support selon l'une quelconque des revendications précédentes, caractérisé en ce que lesdits motifs de prégravure ont dans la direction perpendiculaire audit axe moyen (70) une largeur constante.

9. Support selon l'une quelconque des revendications 1 à 8, caractérisé en ce que ladite structure codifiée est formée par la réunion de deux motifs de prégravure.

10. Support selon la revendication 9, caractérisé en ce que le contenu d'un site intercalaire (71) n'excède pas quatre motifs de prégravure.

11. Support selon l'une quelconque des revendications précédentes, caractérisé en ce que lesdits sites de stockage sont munis d'une zone (72) constituée par un motif de prégravure de forme allongée qui s'étend parallèlement à l'axe moyen (70).

12. Support selon la revendication 11, caractérisé en ce que ledit motif de prégravure de forme allongée est centré par rapport à l'axe moyen (70).

13. Support selon la revendication 11, caractérisé en ce que ladite zone (72) est confondue avec les zones interpistes avant enregistrement de ladite information.

14. Support selon l'une quelconque des revendications précédentes, caractérisé en ce que lesdits motifs de prégravure se présentent sous la forme d'irrégularités de surface correspondant auxdites portions non contiguës.

15. Dispositif optique de suivi d'une piste se présentant dans la surface de référence d'un support d'information sous la forme d'un ensemble d'éléments adjacents (7) le long desquels est agencée une suite de sites non contigus (72) dédiés au stockage de l'information sous une forme optiquement lisible, lesdits sites de stockage (72) étant séparés l'un de l'autre par des sites intercalaires (71) comprenant des motifs de prégravure rangés selon deux alignements hors d'axes qui matérialisent par un encadrement symétrique la position transverse de l'axe moyen non sinueux (70) représentant la trajectoire idéale que doit suivre le moyen d'exploration optique de ladite piste, lequel est constitué par une tache lumineuse astreinte par ledit dispositif à suivre ledit axe moyen (70); lesdits motifs se présentant sous la forme discrète de portions non contiguës à contours fermés de ladite surface de référence; chacun desdits sites intercalaires (71) renfermant au moins l'un desdits motifs de prégravure; la loi de répartition desdits motifs de prégravure entre lesdits alignements étant telle qu'un motif de prégravure occupant l'un desdits alignements dans l'un des sites intercalaires a pour correspondant un motif de prégravure occupant l'autre alignement dans le site intercalaire immédiatement voisin; ladite loi de répartition étant une loi indexée au moyen d'au moins une structure codifiée récurrente réunissant au moins deux motifs de prégravure, qui appartient aux sites intercalaires (71); ledit dispositif comprenant des moyens photodétecteurs (10) délivrant en réponse au rayonnement émergeant de la portion de ladite surface de référence éclairée par ladite tache un signal électrique sensible au déplacement transverse de ladite tache par rapport auxdits éléments de piste; des moyens comparateurs (11) utilisant des valeurs dudit signal prélevées exclusivement au cours de l'exploration desdits sites intercalaires pour générer un signal compensateur (εN) destiné à maintenir ladite tache de lecture entre les trajectoires idéales des deux éléments de piste d'encadrement, caractérisé en ce que des moyens de décodage analysent ledit signal électrique, afin de reconnaître sélectivement l'exploration par ladite tache de ladite structure codifiée récurrente; lesdites valeurs prélevées étant sélectionnées pour être comparées deux à deux par des signaux de commande issus de moyens d'échantillonnage (12) et dérivés de la reconnaissance par lesdits moyens de décodage de chaque phase d'exploration de ladite structure codifiée récurrente; chaque valeur prélevée en conformité avec ladite loi de répartition étant significative de l'interaction optique de ladite tache avec un motif de prégravure (710-D, 710-G) participant audit encadrement symétrique; ledit signal compensateur (εN) changeant de valeur de manière discrète par modification du contenu d'un circuit à mémoire (112).

16. Dispositif selon la revendication 15, caractérisé en ce que lesdits signaux de commande (S1, S2) agissent sur deux moyens commutateurs (110, 111) recevant sur leurs entrées respectives ledit signal électrique; les sorties desdits moyens commutateurs (110, 111) étant reliés aux entrées d'un circuit comparateur à mémoire (112) qui délivre ledit signal compensateur (εN); lesdits signaux de commande assurant des prélèvements alternés dudit signal électrique ordonnés par lesdits moyens d'échantillonnage (12) en conformité avec ladite loi de répartition.

17. Dispositif selon la revendication 16, caractérisé en ce que lesdits signaux de commande (S1, S2) sont produits par décodage (112) de la sortie numérique (SB) d'un circuit de comptage (121) ayant une entrée de remise à zéro et une entrée d'incrémentation; la remise à zéro dudit circuit de comptage (121) intervenant lors de la reconnaissance par un circuit d'identification (120) de ladite structure codifiée récurrente; l'incrémentation (SA) dudit circuit de comptage (121) étant produite par un circuit générateur d'impulsions concordantes avec l'exploration des motifs de prégravure (710-D, 710-G) rangés selon lesdits alignements.

18. Dispositif selon la revendication 17, caractérisé en ce que ledit circuit générateur est un circuit (120) qui détecte l'exploration par ladite tache des motifs de prégravure (710-D, 710-G) rangés selon lesdits alignements.

19. Dispositif selon la revendication 17, caractérisé en ce que ledit circuit générateur est une horloge (123) synchronisée par lesdits moyens de décodage (120).

20. Dispositif optique de génération d'un signal d'erreur de focalisation d'un faisceau lumineux dans la surface de référence d'un support d'information; ledit faisceau explorant une piste se présentant sous la forme d'un ensemble d'éléments adjacents (7) le long desquels est agencée une suite de sites non contigus (72) dédiés au stockage de l'information sous une forme optiquement lisible, lesdits sites de stockage (72) étant séparés l'un de l'autre par des sites intercalaires (71) comprenant des motifs de prégravure rangés selon deux alignements hors d'axes qui matérialisent par un encadrement symétrique la position transverse de l'axe moyen non sinueux (70) représentant la trajectoire idéale que doit suivre une tache d'exploration dudit axe moyen projetée par ledit faisceau lumineux; lesdits motifs se présentant sous la forme discrète de portions non contiguës à contours fermés de ladite surface de référence; chacun desdits sites intercalaires (71) renfermant au moins l'un desdits motifs de prégravure; la loi de répartition desdits motifs de prégravure entre lesdits alignements étant telle qu'un motif de prégravure occupant l'un desdits alignements dans l'un des sites intercalaires a pour correspondant un motif de prégravure occupant l'autre alignement dans le site intercalaire immédiatement voisin; ladite loi de répartition étant une loi indexée au moyen d'au moins une structure codifiée récurrente réunissant au moins deux motifs de prégravure qui appartient aux sites intercalaires (71), caractérisé en ce qu'il comprend deux éléments photodétecteurs (DA, DB) agencés pour intercepter deux fractions du rayonnement émergeant de la portion de ladite surface de référence éclairée par ladite tache séparés par un plan (ZOY) parallèle à la direction d'exploration (Y) et à la normale (Z) à ladite surface de référence; des moyens de décodage (12), analysant la somme des signaux (VA, VB) produits par lesdits éléments photodétecteurs, afin de reconnaître sélectivement l'exploration par ladite tache de ladite structure codifiée récurrente; des moyens comparateurs (13) utilisant des prélèvements effectués en conformité avec ladite loi de répartition sur lesdits signaux (VA, VB) sous la commande des signaux issus de moyens d'échantillonnage (12) et dérivés de la reconnaissance par lesdits moyens de décodage de chaque phase d'exploration de ladite structure; lesdits prélèvements constituant quatre valeurs mémorisées VA1, VB2, VA2 et VB1 significatives de la double détection optique de l'interaction dudit faisceau lumineux avec deux motifs de prégravure définissant ledit encadrement symétrique; la comparaison desdites valeurs mémorisées par lesdits moyens comparateurs (13) produisant ledit signal d'erreur de focalisation (εN) en accord avec la relation $N = (VA1 + VB2) - (VA2 + VB1)$ N étant proportionnel au signal d'erreur de focalisation, en signe et en amplitude, les indices A et B se rapportant aux deux éléments photodétecteurs et les indices 1 et 2 aux deux alignements servant à matérialiser ledit axe moyen (70).

21. Dispositif selon la revendication 20, caractérisé en ce que lesdits moyens comparateurs (13) comprennent quatre circuits intégrateurs (130, 131, 132, 134), un amplificateur différentiel (136) et deux circuits sommateurs (135, 134) reliant respectivement deux à deux lesdits circuits intégrateurs aux deux entrées complémentaires dudit amplificateur différentiel (136).

22. Dispositif selon l'une quelconque des revendications 20 et 21, caractérisé en ce qu'il comporte des moyens de mesure (11) de la position transverse de la tache d'exploration par rapport audit axe moyen (70) échantillonnant ladite somme des signaux (VA, VB); la commande desdits moyens de mesure (11) étant assurée par lesdits moyens d'échantillonnage (12).

23. Dispositif selon l'une quelconque des revendications 15 à 22, caractérisé en ce que lesdits moyens comparateurs (11, 13) délivrant un signal en marches d'escalier ($\varepsilon$N, $\varepsilon'$ N) dont le lissage est assuré par un filtre passe-bas (113, 137).

## Claims

1. A data recording medium comprising, in at least one reference surface adapted for optical recording, an array of adjacent track elements (7), along which a series of noncontiguous sites (72) is arranged intended for storing information in an optically readable form, the said storing sites (72) being separated from each other by interstitial sites (71) comprising configurations for materializing the mean non-sinuous axis (70) of the said track elements (7), which represents the ideal trajectory which should be followed by the transcribing device for the said information; said configurations being in the discrete and pre-engraved form of noncontiguous portions with unbroken contours of the said reference surface, characterized in that the said configurations are configurations arranged in accordance with two systems of alignment outside the axes, which materialize the transverse position of the said mean axis (70) by a symmetrical framing action, each interstitial site including at least one of the said pre-engraving configurations (710 G and 710 D); the law of distribution of the said configurations of pre-engraving between the said systems of alignment being such that a pre-engraving configuration occupying one of the systems of alignment in one of the interstitial sites has as a corresponding part a pre-engraving configuration occupying the other system of alignment in the directly adjacent interstitial site with the exclusion of every pre-engraving configuration centered on the axis; the said law of distribution being a law indexed by means of at least one encoded recurrent structure (74) uniting at least two pre-engraving configurations, the said pre-engraving configurations being such that their length and/or their spatial distribution represent a selectively detectable code.

2. The support as claimed in claim 1, characterized in that the said encoded structure is contained in each of the said interstitial sites (71) and their spatial distribution along the said track elements (7) is uniform.

3. The support as claimed in claim 1 or claim 2, characterized in that the said distribution law is a law which is indexed by means of the two recurrent and distinct encoded structures.

4. The support as claimed in any one of the claims 1 through 3, characterized in that the said encoded structure comprises at least one pre-engraving configuration centered in relation to at least one of the said alignment systems.

5. The support as claimed in claim 1, characterized in that in a given interstitial site the said encoded structure is present on the said two alignment systems.

6. The support as claimed in claim 5, characterized in that the said interstitial sites (71) which include the said encoded structure (74) surround a predetermined number of interstitial sites deprived of the said encoded structure (74).

7. The support as claimed in any one of the claims 1 through 6, characterized in that the said support is in the form of a disk, and the said mean axes (70) of the said track elements (7) in the said reference surface take on the form of circles or spirals which are concentric and equidistant.

8. The support as claimed in any one of the preceding claims, characterized in that the said pre-engraving configurations have a constant width in the direction perpendicular to the said mean axis (70).

9. The support as claimed in anyone of the claims 1 through 8, characterized in that the said encoded structure is formed by the union of two pre-engraving configurations.

10. The support as claimed in claim 9, characterized in that the content of an interstitial site (71) does not exceed four pre-engraving configurations.

11. The support as claimed in any one of the preceding claims, characterized in that the said storing sites are provided with a zone (72) constituted by a pre-engraving configuration with an elongated form which extends in parallelism to the means axis (70).

12. The support as claimed in claim 11, characterized in that the said pre-engraving configuration with an elongated form is centered with respect to the mean axis (70).

13. The support as claimed in claim 11, characterized in that the said zone (72) is merged with zones, placed between the tracks, before recording of the said information.

14. The support as claimed in any one of the preceding claims, characterized in that the said pre-engraving configurations are in the form of irregularities in the surface corresponding to the said noncontiguous portions.

15. An optical device for following a track in the reference surface of an information storage medium in the form of an array of adjacent elements (7) along which there is placed a series of noncontiguous sites (72) intended for the storing of information in an optically readable form, the said storing sites (72) being separated from each other by interstitial sites (71) comprising pre-engraving configurations arranged in accordance with two alignment systems clear of axes and materializing a symmetrical framing action, the transverse position of the non-sinuous mean axis (70) representing the ideal trajectory, which should be followed by light spot caused by the said device to follow the said mean axis (70); the said configurations being in the discrete form of noncontiguous portions with unbroken contours of the said reference surface; each of the said interstitial sites (71) including at least one of the said pre-engraving configurations; the distribution law of the said pre-engraving configurations among the said alignment systems being such that one pre-engraving configuration occupying one of the said alignment systems in one of the said interstitial sites corresponds with a pre-engraving configuration occupying the other alignment system in the directly adjacent interstitial site; the said distribution law being a law indexed by means of at least one encoded recurrent structure uniting at least two pre-engraving configurations, which belong to interstitial sites (71); the said device comprising photodetector means (10) providing, in response to radiation from the portion of the said surface illuminated by the said spot, an electrical signal responsive to the transverse displacement of the said spot in relation to the said track elements; comparison means (11) using the values of the said signal detected exclusively in the course of exploration of the said interstitial sites in order to generate a compensating signal ($\varepsilon N$) destined to maintain the said reading spot between the ideal trajectories of the two elements of the framing action track, characterized in that decoding means analyse the said electrical signal in order to selectively recognize the exploration by the said spot of the said encoded recurrent structure; the said detected values being selected in order to be compared two by two by command signals originating from sampling means (12) and derived from the recognition by the said decoding means for each phase of exploration of the said recurrent encoded structure; each value detected in accordance with the said distribution law being significant of the optical interaction of the said spot with a pre-engraving configuration (710-D and 710-G) participating in the said value symmetrical framing action; the said compensating signal ($\varepsilon N$) changing in value in a discrete manner for modification of the content of a memory circuit (112).

16. The device as claimed in claim 15, characterized in that the said command signals (S1 and S2) act on two switch means (110 and 111) receiving the said electrical signal at their respective inputs; the outputs of the said switch means (110 and 110) being connected with the inputs of a memory comparison circuit (112) which provides the said compensating signal ($\varepsilon N$); the said command signals ensuring alternating detection of the said electrical signal ordered by the said sampling means (12) in conformity with the said distribution law.

17. The device as claimed in claim 16, characterized in that the said command signals (S1 and S2) are produced by decoding (112) of the digital output (S2) of a counting circuit (121) having a reset input and an increment input; the resetting to zero of the said counting circuit (121) occurring at the time of recognition by an identification circuit (120) of the said recurrent encoded structure; the incrementation (SA) of the said counting circuit (121) being produced by a pulse generating circuit coinciding with the exploration of pre-engraving configurations (710-D and 710-G) arranged in accordance with the said alignment systems.

18. The device as claimed in claim 17, characterized in that the said generating circuit is a circuit (120) which detects the exploration by the said spot of pre-engraving configurations (710-D and 710-G) arranged in accordance with the said alignment systems.

19. The device as claimed in claim 17, characterized in that the said generating circuit is a clock (123) synchronized by the said decoding means (120).

20. An optical device for the generation of an error signal with respect to the focussing of a light beam in the reference surface of an information storage medium; the said beam exploring a track in the form of an array of adjacent elements (7), along which there is arranged a series of noncontiguous sites (72) intended for the storing of the information in an optically readable form, the said storage sites (72) being separated from each other by interstitial sites (71) comprising pre-engraving configurations arranged in accordance with two alignment systems outside the axes which materialize a symmetrical framing action of the transverse position of the non-sinuous mean axis (70) representing the ideal trajectory to be followed by an exploring spot of the said mean axis projected by the said light beam; the said configurations being in a discrete form of noncontiguous portions with unbroken contours of the said reference surface; each of the said interstitial sites (71) including at least one of the said pre-engraving configurations; the law of distribution of the said pre-engraving configuration among the said alignment systems being such that a pre-engraving configuration occupying one of the said alignment systems in one of the interstitial sites corresponds to a pre-engraving configuration occupying the other alignment system in the adjacent interstitial site; the said law of distribution being a law indexed by means of at least one encoded recurrent structure uniting at least two pre-engraving configurations which belong to interstitial sites (71), characterized in that it comprises photodetector elements (DA and DB) arranged to intercept two radiation fractions emerging from the portion of the reference surface illuminated by the said spot separated by a plane (ZOY) parallel to the direction of exploration (Y) and to the normal (Z) of the said reference surface; decoding means (12), analysing the sum of the signals (VA and VB) produced by the said photodetector elements in order to recognize selectively the exploration by the said spot of the said recurrent encoded structure; comparison means (13) using the detection effected in accordance with the distribution law on the said signals (VA and VB) under the control of the signals from sampling means (12) and derived from the recognition by the said decoding means of each phase of exploration of the said structure; the said detections constituting four stored values Va1, VB2, VA2 and VB1 significant of the double optical detection of the interaction of the said light beam with two pre-engraving configurations defining the said symmetrical framing action; the comparison of the said values stored by the said comparison means (13) producing the said focussing error signal (εN) in accordance with the relationship N = (VA1 + VB2) − (VA2 + VB1), N being proportional to the focussing error signal, in sign and in amplitude, the indices A and B relating to the two photodetector elements and the indices 1 and 2 relating to the two alignment systems serving to materialize the said mean axis (70).

21. The device as claimed in claim 20, characterized in that the said comparison means (13) comprise four integrating circuits (130, 131, 132 and 134), a differential amplifier (136) and two summating circuits (135 and 134) connecting respectively the said integrating circuits two by two with two complementary inputs of the said differential amplifier (136).

22. The device as claimed in any one of the claims 20 and 21, characterized in that it comprises measuring means (11) for the transverse position of the exploring spot in relation to the said mean axis (70) sampling the said sum of the signals (VA and VB); the control of the said measuring means being caused by the said sampling means (12).

23. The device as claimed in any one of the claims 15 to 22, characterized in that the said comparison means (11 and 13) supply a staircase signal (εN and ε′N), which is smoothed by a low pass filter (113 and 137).

## Patentansprüche

1. Informationsträger, der auf wenigstens einer optisch beschreibbaren Bezugsfläche eine Anordnung von benachbarten Spurelementen (7) enthält, denen entlang eine Folge von sich nicht berührenden Stellen (72) angeordnet ist, die für die Speicherung von Information in optisch lesbarer Form bestimmt sind, wobei die Speicherstellen (72) voneinander durch zwischengeschaltete Stellen (71) getrennt sind, die Grundelemente enthalten, um eine nicht gewellte Mittelachse (70) der Spurelemente (7) zu bilden, die eine ideale Bahn darstellt, der das Mittel zur Informationsaufzeichnung folgen muß; wobei sich die Grundelemente in Form einzelner und vorgravierter sich nicht berührender Teile von geschlossenen Umfängen der Bezugsoberfläche darstellen, dadurch gekennzeichnet, daß die Grundelemente solche Grundelemente sind, die entlang von zwei Aneinanderreihungen außerhalb der Achsen ausgerichtet sind, die die Querposition der Mittelachse (70) durch eine symmetrische Begrenzung darstellen, wobei jede Zwischenstelle mindestens eines der vorgravierten Elemente (710G, 710D) einschließt; wobei das Verteilungsgesetz der vorgravierten Grundelemente zwischen den Aneinanderreihungen von solcher Art ist, daß ein vorgraviertes Grundelement, das eine der Aneinanderreihungen der zwischengeschalteten Stellen besetzt, als Gegenstück ein vorgraviertes Grundelement hat, das die andere Aneinanderreihung in der unmittelbar benachbarten zwischengeschalteten Stelle besetzt, unter Ausschluß jeglichen vorgravierten Grundelementes, das auf die Achse zentriert ist; wobei das Verteilungsgesetz ein Gesetz ist, das mittels mindestens einer codierten, sich wiederholenden Struktur (74) indiziert ist, die wenigstens zwei vorgravierte Grundelemente vereint, wobei die vorgravierten Grundelemente so beschaffen sind, daß ihre Länge und/oder räumliche Verteilung einen selektiv abtastbaren Code darstellt.

2. Träger nach Anspruch 1, dadurch gekennzeichnet, daß die codierte Struktur in jeder der zwischengeschalteten Stellen (71) enthalten ist, wobei ihre räumliche Verteilung entlang der Spurelemente (7) einheitlich ist.

3. Träger nach einem der Ansprüche 1 und 2, dadurch gekennzeichnet, daß das Verteilungsgesetz ein Gesetz ist, das mittels zweier codierter sich wiederholender und sich unterscheidender Strukturen indiziert ist.

4. Träger nach einem der Ansprüche 1 bis 3, dadurch gekennzeichnet, daß die codierte Struktur wenigstens ein vorgraviertes Grundelement enthält, das in Bezug auf wenigstens eine der Aneinanderreihungen zentriert ist.

5. Träger nach Anspruch 1, dadurch gekennzeichnet, daß in einer gleichen zwischengeschalteten Stelle die codierte Struktur auf den zwei Aneinanderreihungen vorhanden ist.

6. Träger nach Anspruch 5, dadurch gekennzeichnet, daß die zwischengeschalteten Stellen (71), die die codierte Struktur (74) enthalten, eine vorbestimmte Anzahl von zwischengeschalteten Stellen umschließen, die nicht mit der codierten Struktur (74) versehen sind.

7. Träger nach einem der Ansprüche 1 bis 6, dadurch gekennzeichnet, daß der Träger die Form einer Scheibe hat, wobei die Mittelachsen (70) der Spurelemente (7) in der Bezugsoberfläche die Form von abstandsgleichen konzentrischen Kreisen oder Spiralen annehmen.

8. Träger nach einem der vorstehenden Ansprüche, dadurch gekennzeichnet, daß die vorgravierten Grundelemente in Richtung senkrecht zur Mittelachse (70) eine konstante Breite haben.

9. Träger nach einem der Ansprüche 1 bis 8, dadurch gekennzeichnet, daß die codierte Struktur durch die Vereinigung von zwei vorgravierten Grundelementen gebildet wird.

10. Träger nach Anspruch 9, dadurch gekennzeichnet, daß der Inhalt einer zwischengeschalteten Stelle (71) vier vorgravierte Grundelemente nicht überschreitet.

11. Träger nach einem der vorstehenden Ansprüche, dadurch gekennzeichnet, daß die Speicherstellen mit einem Bereich (72) ausgestattet sind, der durch ein vorgraviertes Grundelement von länglicher Form gebildet wird, das sich parallel zur Mittelachse (70) erstreckt.

12. Träger nach Anspruch 11, dadurch gekennzeichnet, daß das vorgravierte Grundelement von länglicher Form in Bezug auf die Mittelachse (70) zentriert ist.

13. Träger nach Anspruch 11, dadurch gekennzeichnet, daß der Bereich (72) mit den Zwischenspurbereichen vor Aufnahme der Information zusammenfällt.

14. Träger nach einem der vorstehenden Ansprüche, dadurch gekennzeichnet, daß die vorgravierten Grundelemente sich in Form von Oberflächenunregelmäßigkeiten darstellen, die den sich nicht berührenden Teilen entsprechen.

15. Optische Spurverfolgungsanordnung, die sich auf der Bezugsoberfläche eines Informationsträgers in Form einer Anordnung von benachbarten Elementen (7) darstellt, denen entlang eine Folge von sich nicht berührenden Stellen angeordnet ist, die zur Informationsspeicherung in optisch lesbarer Form bestimmt sind, wobei die Speicherstellen (72) voneinander durch zwischengeschaltete Stellen (71) getrennt sind, die vorgravierte Grundelemente enthalten, die entlang von zwei Aneinanderreihungen außerhalb der Achsen angeordnet sind, die durch symmetrische Einrahmung die Querposition zur nicht gewellten Mittelachse (70) darstellen, die die ideale Bahn darstellt, der das optische Spurabtastmittel folgen muß, welches aus einem Lichtfleck besteht, der durch die Anordnung gezwungen ist, der Mittelachse (70) zu folgen; wobei sich die Grundelemente als einzelne sich nicht berührende Teile von geschlossenem Umfang der Bezugsoberfläche darstellen; wobei jede der zwischengeschalteten Stellen (71) wenigstens eines der vorgravierten Grundelemente einschließt; das Verteilungsgesetz der vorgravierten Grundelemente zwischen den Aneinanderreihungen so beschaffen ist, daß ein vorgraviertes Grundelement eine der Aneinanderreihungen in einer der zwischengeschalteten Stellen besetzt und als Gegenstück ein vorgraviertes Grundelement hat, das die andere Aneinanderreihung in einer unmittelbar benachbarten zwischengeschalteten Stelle besetzt; das Verteilungsgesetz ein Gesetz ist, das mittels von wenigstens einer codierten sich wiederholenden Struktur indiziert ist, die wenigstens zwei vorgravierte Grundelemente einschließt, die zu den zwischengeschalteten Stellen (71) gehören; die Anordnung enthält Photodetektormittel (10), die eine Reaktion auf die Strahlung liefern, die von dem Teil der Bezugsoberfläche, die durch den Lichtfleck beleuchtet wird, ein elektrisches Signal ansprechend auf die Querbewegung des Flecks in Bezug auf die Spurelemente liefert; Vergleichsmittel (11) benutzen die Signalwerte, die ausschließlich im Verlauf der Abtastung der zwischengeschalteten Stellen abgenommen werden, um ein Kompensationssignal (εN) zu erzeugen, das dazu bestimmt ist, den Lesefleck zwischen den idealen Bahnen der zwei Elemente der Begrenzungsspur zu halten, dadurch gekennzeichnet, daß Decodiermittel das elektrische Signal analysieren, um selektiv die Abtastung der codierten sich wiederholenden Struktur durch den Fleck zu erkennen; wobei die abgenommenen Werte zum paarweisen Vergleich durch Steuersignale ausgewählt werden, die von den Abtastmitteln (12) ausgesendet werden und von der durch die Decodiermittel erfolgenden Erkennung der codierten sich wiederholenden Struktur abgeleitet sind; wobei jeder mit dem Verteilungsgesetz in Übereinstimmung befindliche abgenommene Wert signifikant für die optische Wechselwirkung des Fleckes mit einem vorgravierten Grundelement (710-D, 710-G) ist, das an der symmetrischen Einrahmung teilnimmt; wobei das Kompensationssignal (εN) auf diskrete Weise seinen Wert durch Veränderung des Inhaltes eines Speicherkreises (112) ändert.

16. Anordnung nach Anspruch 15, dadurch gekennzeichnet, daß die Steuersignale (S1, S2) auf zwei Umschaltmittel (110, 111) wirken, die an ihren entsprechenden Eingängen das elektrische Signal empfangen; wobei die Ausgänge der Umschaltmittel (110, 111) mit den Eingängen eines Vergleichskreises (112) mit Speicher verbunden sind, der das Kompensationssignal (εN) liefert; wobei die Steuersignale die wechselweise Abnahme des elektrischen Signals in einer durch die Abtastmittel (12) in Übereinstimmung mit dem Verteilungsgesetz vorgeschriebenen Ordnung gewährleisten.

17. Anordnung nach Anspruch 16, dadurch gekennzeichnet, daß die Steuersignale (S1, S2) durch Decodierung (112) des digitalen Ausgangs (S2) eines Zählkreises (121), der einen Eingang zum Rücksetzen auf Null und einen Eingang zur Inkrementierung hat, erzeugt werden; das Rücksetzen auf Null des Zählkreises (121) erfolgt bei der Erkennung der sich wiederholenden codierten Struktur durch einen Identifizierungskreis (120); die Inkrementierung (SA) des Zählkreises (121) erfolgt durch einen Generatorkreis, der Impulse erzeugt, die mit der Abtastung der vorgravierten Grundelemente (710-D, 710-G) übereinstimmen, die entsprechend den Ausrichtungen angeordnet sind.

18. Anordnung nach Anspruch 17, dadurch gekennzeichnet, daß der Generatorkreis ein Kreis (120) ist, der die Abtastung der vorgravierten Grundelemente (710-D, 710-G) durch den Fleck demoduliert, die entsprechend der Ausrichtungen angeordnet sind.

19. Anordnung gemäß Anspruch 17, dadurch gekennzeichnet, daß der Generatorkreis eine Uhr (123) ist, die durch die Decodiermittel (120) synchronisiert wird.

20. Optische Anordnung zur Erzeugung eines Korrektursignals für die Bündelung eines Lichtstrahls auf der Bezugsoberfläche eines Informationsträgers; wobei der Strahl eine Spur abtastet, die sich in Form der Anordnung benachbarter Elemente (7) darstellt, entlang denen eine Folge sich nicht berührender Stellen (72) angeordnet ist, die zur Informationsspeicherung in optisch lesbarer Form bestimmt sind, wobei die Speicherstellen (72) durch zwischengeschaltete Stellen (71) voneinander getrennt sind, die Vorgravierelemente enthalten, die entsprechend zwei Ausrichtungen außerhalb der Achsen, die durch eine symmetrische Einrahmung die Querposition der nichtgewellten Mittelachse (70) darstellen, die die ideale Bahn darstellt, der ein die Mittelachse abtastender Fleck, projiziert durch den Lichtstrahl, folgen

15

muß; die Grundelemente stellen sich in Form von einzelnen sich nicht berührenden Teilen von geschlossenem Umfang an der Bezugsoberfläche dar; jede der zwischengeschalteten Stellen (71) schließt wenigstens eines der Vorgravierelemente ein; das Verteilungsgesetz der besagten Vorgravierelemente zwischen den Aneinanderreihungen ist so, daß ein Vorgravierelement, das eine der Aneinanderreihungen in einer der zwischengeschalteten Stellen besetzt, als Gegenstück ein Vorgravierelement hat, das in der anderen Aneinanderreihung die unmittelbar benachbarte Stelle besetzt; das Verteilungsgesetz ist ein Gesetz, das mittels mindestens einer codierten sich wiederholenden Struktur indiziert ist, die mindestens zwei Vorgravierelemente vereint, die zu den zwischengeschalteten Stellen (71) gehören, dadurch gekennzeichnet, daß sie zwei Photodetektorelemente (DA, DB) enthält, die angeordnet sind, um zwei Bruchteile der Strahlung einzufangen, die von dem Teil der Bezugsoberfläche ausgeht, die durch den besagten Fleck beleuchtet wird, und die durch eine Ebene (ZOY) getrennt sind, die parallel zur Abtastrichtung (Y) und zur Normalen (Z) auf die Bezugsoberfläche ist; wobei Decodiermittel (12) die die Summe der von den Photodetektoren erzeugten Signale (VA, VB) analysieren, um selektiv die Abtastung der besagten sich wiederholenden codierten Struktur durch den Fleck zu erkennen; Vergleichsmittel (13) Werte verwenden, die in Übereinstimmung mit dem Verteilunggesetz von den Signalen (VA, VE) abgenommen wurden, unter der Steuerung durch die Signale, die von den Abtastmitteln (12) ausgesandt werden und die von der Erkennung der Struktur durch die Decodiermittel für jede Abtastphase abgeleitet werden; wobei die Werte aus vier gespeicherten Werten VA1, VB2, VA2 und VB1 bestehen, die kennzeichnend für die doppelte optische Detektion der Wechselwirkung des Lichtstrahls mit den Vorgravierelementen sind, mit zwei Vorgravierelementen, welche die symmetrische Einrahmung definieren; wobei der Vergleich der gespeicherten Werte durch die Vergleichsmittel (13) das Fokussierungskorrektursignal (εN) in Übereinstimmung mit der Beziehung N = (VA1 + VB2) − (VA2 + VB1) erzeugt, wobei N proportional zum Fokussierungskorrektursignal ist, in Vorzeichen und Amplitude, und die Indizes A und B sich auf die zwei Photodetektorelemente beziehen und die Indizes 1 und 2 auf die Aneinanderreihungen, die dazu dienen, die Mittelachse (70) zu bilden.

21. Anordnung nach Anspruch 20, dadurch gekennzeichnet, daß die Vergleichsmittel (13) vier Integratorkreise (130, 131, 132, 134), einen Differentialverstärker (136) und zwei Summierkreise (135, 134) enthalten, die paarweise die entsprechenden Integratorkreise mit den komplementären Eingängen des Differentialverstärkers (136) verbinden.

22. Anordnung gemäß einem der Ansprüche 20 und 21, dadurch gekennzeichnet, daß sie Meßmittel (11) für die Querposition des Abtastfleckes in Bezug auf die Mittelachse (70) enthält, welche die Summe der Signale (VA, VB) abtastet; wobei die Steuerung der Meßmittel (11) durch die Abtastung (12) sichergestellt wird.

23. Anordnung nach einem der Ansprüche 15 bis 23, dadurch gekennzeichnet, daß die Vergleichsmittel (11, 13) ein Treppensignal (εN, ε'N) liefern, dessen Glättung durch ein Tiefpaßfilter (113, 137) sichergestellt wird.

FIG.1

S(t)

ε'

1

2

ε

M₂

ΔY

fℓ

M₁

fe

B

Ob

6

5

3

4

7

Z

Y

0

X

EP 0 089 274 B1

FIG.2

FIG.3

FIG.4

FIG.5

FIG.6

# FIG.7

# FIG.8

# FIG. 9

EP 0 089 274 B1

# FIG.10

# FIG.11

FIG.12

FIG.13

31

# FIG.14